# EUROPEAN PATENT APPLICATION

(11) **EP 0 860 322 A1**
(43) Date of publication of application: **26.08.1998**
(21) Application number: 98200575.3
(22) Date of filing: 24.02.1998
(51) Int. Cl.: B60Q 1/44, B60Q 1/30

(54) **Brake light system for motor vehicles**

(30) Priority: 24.02.1997 NL 1005360; 25.04.1997 NL 1005907
(71) Applicant: Bork, Jan, 7934 PC Stuifzand (NL)
(72) Inventor: Bork, Jan, 7934 PC Stuifzand (NL)
(74) Representative: Smulders, Theodorus A.H.J., Ir.

(57) **Abstract**

A brake light system for motor vehicles, comprising at least one group of one or more brake lights which is conventionally energizable through a switch connected with the braking system of the motor vehicle for indicating when the braking system is being operated, the brake light system being further provided with a control device for at least one additional group of one or more brake lights, the control device comprising deceleration detection means which in operation, in response to a predetermined extent of deceleration of the motor vehicle, provide a signal which energizes the additional group of brake lights directly or indirectly.

## Description

This invention relates to a brake light system for motor vehicles, comprising at least one group of one or more brake lights which is conventionally energizable through a switch connected with the braking system of the motor vehicle for indicating when the braking system is being operated. This invention further relates to a motor vehicle fitted with such a brake light system, and to an accessory set for use on a motor vehicle.

Such brake light systems have long been known. Also known are brake light systems which, in addition to the conventional, prescribed brake lights, comprise an additional brake light which, with a view to better visibility, is arranged higher than are the conventional brake lights. In passenger cars, such an additional brake light is often arranged adjacent the rear window. This additional brake light is commonly referred to as "third brake light" and in most cases this third brake light is arranged centrally of the rear window, adjacent the top or bottom edge thereof, that is, at a relatively high position.

Although in fact such a third brake light sometimes indicates to a following vehicle more clearly than do the conventional brake lights that the brake pedal is being operated, the third brake light does not indicate, any more than the "normal" brake lights do, to what extent the vehicle is in effect slowing down. In practice, the brake pedal of a motor vehicle is often lightly depressed without entailing a substantial deceleration. This occurs especially when driving in a queue and may then lead to startled reactions of fellow road users and even to head-tail collisions.

Accordingly, there exists a need for a method for indicating, in addition to the braking behavior of the driver of a motor vehicle, the behavior of the motor vehicle itself. The object of the invention is to meet this need.

To that end, according to the invention, a brake light system of the above-described type is characterized in that the brake light system is further provided with at least one additional group of one or more brake lights arranged relatively high, and with a control device comprising deceleration detection means which, in operation, in response to an extent of deceleration of the motor vehicle in excess of a predetermined value and independently of the operation of the braking system, provide a signal which energizes the additional group of brake lights directly or indirectly.

It is noted that Dutch patent application 9001944 discloses a device capable of signaling to what extent the driver of a vehicle is braking the vehicle. To that end, lamps of different colors or lamps of varying intensity are used. However, this device does not work independently of the braking system and yields an unquiet traffic image.

Further, German Offenlegungsschrift 3003094 and German Gebrauchsmuster G 9412898.7 disclose a control device with deceleration detection means, connected with the indicator system. These known devices are designed for automatically switching on the indicator system in the event of a considerable deceleration of the vehicle, for instance upon a collision. Switch-off does not occur automatically, but must be done by hand. These known systems do not involve a third brake light, nor do they operate under normal circumstances, where no extreme deceleration occurs.

According to French patent application 2678566, one or more brake lights are switched on depending on the extent of deceleration of the car. Like conventional brake lights, the lamps are automatically switched off again if the deceleration stops. A third brake light at the rear window as a supplement to the conventionally operating brake lights is not described.

According to French patent 2129278, the extent of energization and hence the intensity of the brake lights of a car is controlled by a swiveling or sliding weight, or, in a different embodiment, by the pressure in the braking system. However, this concerns a control of the conventional brake lights and not of an additional, third brake light.

German Offenlegungsschrift 2926247 again describes a sliding weight provided with contacts, via which, depending on the position of the sliding weight, the ordinary brake lights are energized, or the indicators, which in a first phase burn continuously and eventually, upon high deceleration, start to blink. This is a confusing use of the indicators. A third brake light in addition to the conventional brake lights is not described.

Nor is such the case in the Gebrauchsmuster DE 29506192 U1, which involves a sliding weight again, which, depending on the occurrent deceleration, causes the brake lights to burn with an increasing intensity, or lamps with different colors, or switches on the indicator system.

In the following, the invention will be further described with reference to the accompanying drawings of an exemplary embodiment.
Fig. 1 schematically shows an example of a brake light system according to the invention;
Fig. 2 schematically shows an example of a control device for use in a device according to the invention;
Fig. 3 schematically shows an example of a measuring instrument for checking a device according to the invention;
Fig. 4 schematically shows a contact arm for use in a device according to the invention; and
Fig. 5 schematically shows an example of an electronic embodiment of a control device according to the invention.

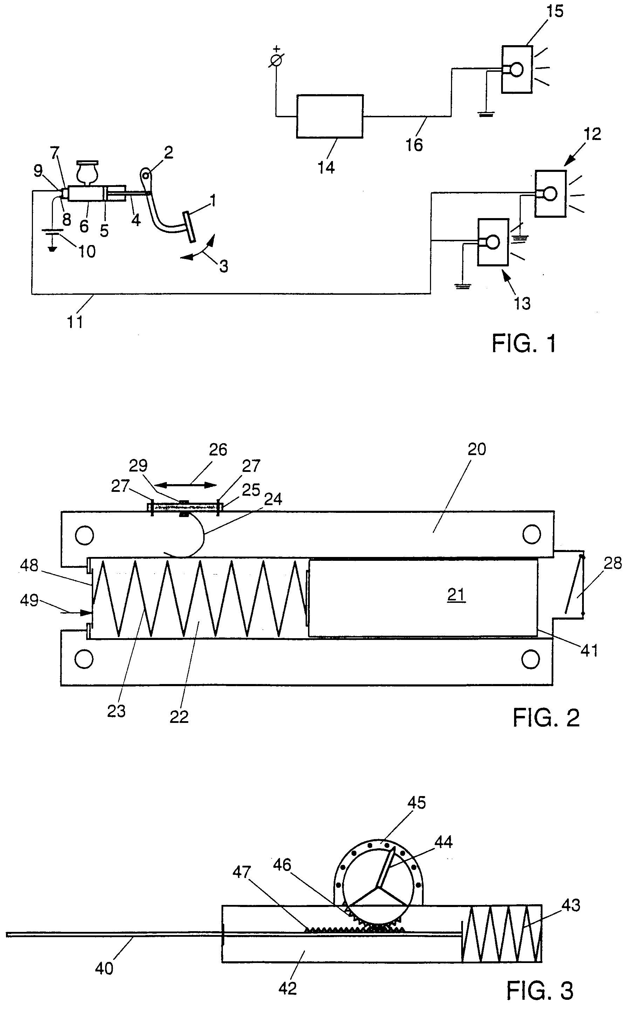

Fig. 1 schematically shows an example of a brake light system according to the invention. The figure shows a brake pedal 1, which is conventionally mounted at a suspension point 2 for pivoting movement, as indicated by an arrow 3. It is noted that, in principle, the invention is also applicable in two-wheeled motor vehicles and that in that case a manually operable brake lever can be present. The same holds for vehicles especially designed for the handicapped.

The brake pedal 1 is conventionally coupled to a piston rod 4 of a piston 5 accommodated in a brake cylinder 6. The brake cylinder is provided with a switch 7, which is operated as soon as the brake pedal is operated. Alternatively, the switch can obviously be mechanically operated directly or indirectly by the brake pedal.

The switch has one terminal clamp 8 connected to the electric power supply source, for instance the positive pole of a battery 10. The other clamp 9 is connected, via a line 11, with the conventional brake lights 12, 13, which are arranged on the left and the right at the back of the vehicle.

The figure further shows a control device 14 for a group of one or more additional brake lights 15. The control device is connected with the supply voltage, for instance the positive pole of the battery 10, and is arranged to transmit the supply voltage via a line 16 to the additional brake light(s) 15 depending on the extent of deceleration of the vehicle.

The control device can be a substantially mechanical device, but can also contain an electronic circuit. If necessary, the control device can be connected both with the positive battery pole and with the negative battery pole.

Fig. 2 schematically shows an example of a substantially mechanical control device 14. The device shown comprises a housing 20, in which a weight 21 can move back and forth. The housing is to be mounted in the longitudinal direction of the vehicle, in such a manner that the weight, as a result of the mass inertia, can slide forward if the vehicle is braked. The weight can have any suitable form. In the example shown, the sliding weight is elongate. The sliding weight can be solid or, for instance, tubular, and have a round or angular cross section. The housing has an internal cavity 22 of a cross-sectional shape such that the sliding weight can move back and forth in the housing along a predetermined path. The sliding weight is held in the rest position by means of a resetting force. To that end, in the example shown, a compression spring 23 is arranged before the sliding weight in the cavity 22 of the housing. Obviously, it is also possible to use a draw spring behind the sliding weight. The compression spring 23 serves to keep the weight in the rest position, also when the vehicle passes over unevennesses in the road surface or is only braked to a slight extent. Only upon a considerable deceleration of the vehicle should the mass inertia of the sliding weight overcome the resetting force exerted by the spring. At some distance before the rest position of the sliding weight, a schematically depicted contact arm 24 is mounted, which upon a considerable deceleration of the vehicle can be operated by the sliding weight moving forwards, so as to actuate a switching element which in turn switches on the additional brake light 15.

Preferably, the contact arm 24 is movably mounted in such a manner that the distance which the sliding weight must travel to contact the contact arm is adjustable. In the example shown, the contact arm is mounted in a mounting plate 25, which in turn is mounted on the housing 20 for sliding movement, as indicated with an arrow 26. To that end, the mounting plate can be provided, for instance, with slotted holes for bolts 27 or the like.

The sliding weight is preferably mounted in such a manner that the return travel of the sliding weight to its rest position proceeds uniformly and with some delay. To that end, for instance, a counterforce exerted by a spring can be employed. In the example shown, the return travel of the sliding weight is damped by the use of a schematically indicated non-return valve 28, which, during the return travel of the sliding weight, causes a slight overpressure behind the sliding weight, that is, on the side of the sliding weight remote from the spring 23. To that end, the sliding weight should have a cross-sectional shape which substantially fills up the passage in the housing 20, though without preventing smooth reciprocation of the sliding weight.

It is possible to mount the contact arm on the housing 20 in electrically insulated fashion, for instance by using a mounting plate 25 of insulating material. One end 29 of the contact arm can then be connected with one pole of the lamp 15. The other end, upon sufficient deceleration of the vehicle, then forms the ground connection via the sliding weight, at least if the housing is not insulated with respect to the frame, the chassis or the bodywork of the vehicle. If the housing *is* mounted in insulated fashion, the housing can, for instance, be connected with one pole of the lamp 15 and the contact arm 24, insulated with respect to the housing, with the positive battery pole.

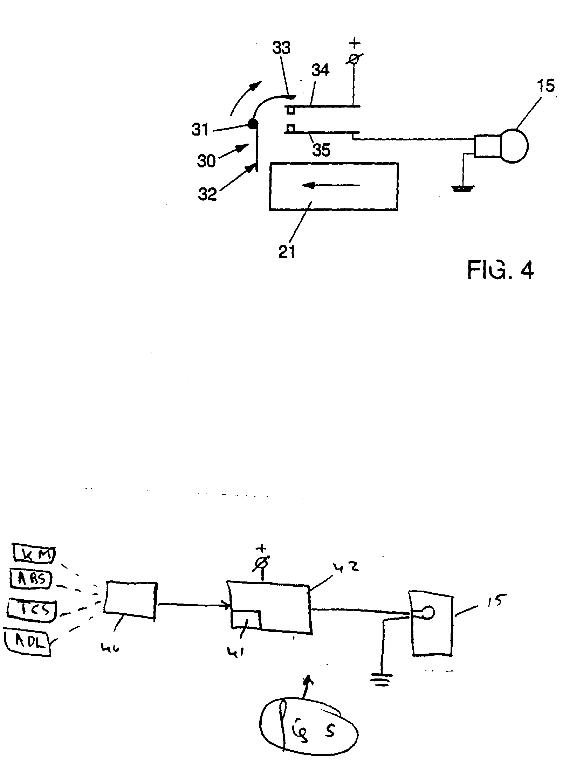

The contact arm shown in Fig. 2 is designed as a springy element. The contact arm can also be pivotally mounted, for instance in the manner shown in Fig. 4. Fig. 4 schematically shows a contact arm 30, which is pivotally mounted at 31 and which has an end 32 extending into the path of a sliding weight 21. The other end 33 of the contact arm is capable of pressing two contacts 34, 35 onto each other if the end 32 of the contact arm is operated by the sliding weight. In this example, one contact 34 is connected with the positive supply voltage and the other contact 35 is connected with the additional brake light 15.

Alternatively, the sliding weight can carry a gear rack or be coupled with a gear rack, while the contact arm is provided with or coupled to a gear segment, which is in engagement with the gear rack and which rotates if the sliding weight moves. Also, the sliding weight can follow a curved path instead of a rectilinear path. To that end, the sliding weight can, for instance, be mounted at the end of a pivotally mounted arm. Such modifications are within reach of those skilled in the art.

Fig. 3 schematically shows an example of a measuring instrument with the aid of which the operation of a control device according to the invention can be checked. The instrument shown is provided with a pressure pin 40, which, through an opening 41 in the housing 20, can be pushed against the rear side of the sliding weight 21. The pin has one end reaching into a sleeve 42 or the like and is pushed outwards by spring force. Accordingly, if the free end of the pin is pushed against the sliding weight, the pin can move against the spring force, which in this example is provided by a compression spring 43, further into the sleeve 42. The extent to which the pin is driven into the sleeve if the free end of the pin is pushed against the sliding weight until the additional brake light 15 starts to burn, is indicative of the retardation force needed to actuate the additional group of brake lights. In the example shown, the movement of the pin 40 in the sleeve 41 is indicated by means of a pointer 44 which moves along a scale 45 and which is driven by means of a gear segment which cooperates with a toothing 47 on the pin.

With the aid of the instrument shown in Fig. 3 or a similar instrument, the proper operation of the control device can be periodically checked. If need be, the operation of the spring, or the position of the contact arm 24, can be re-adjusted. The spring can be adjusted by changing its bias, for instance by means of a movable pressure plate 48, as schematically shown in Fig. 2 with an arrow 49. Various other possibilities will readily occur to the technical draughtsman.

As already noted, the control device 14 for the additional brake light(s) can also include an electronic circuit. Well known are electrical circuits comprising one or more piezo elements. A suitable electronic circuit for use in a control device according to the invention is the integrated circuit type ADXL05, marketed by Analog Devices, which is presented as a "single chip accelerometer". This integrated circuit, together with an external supply and a few capacitors, forms a complete accelerometer/decelerometer without external moving parts. With the aid of such a circuit the control device can be miniaturized to such an extent as to allow incorporation into a lamp housing, such as for instance a third brake light.

The occurring deceleration can be detected and converted to a control signal in various other ways. Thus, the control device 14 can comprise, for instance, a speed detector 40 (Fig. 5) in combination with a time measuring device 41, both advantageously of electronic design, and which provide a control signal as soon as the speed decreases to a predetermined extent within a predetermined time interval. To that end, use can be made, for instance, of a processor or minicomputer 42, which receives signals representing the instantaneous speed. The time measuring device can be, for instance, an electronic clock, a pulse counter or the like. Such a time measuring device 41 can be integrated into a processor, as indicated in Fig. 5.

The speed signals can be obtained from, for instance, the speedometer (KM) of the vehicle or from an anti-blocking system (ABS) or a traction control system (TCS). Also, a detector can be applied which cooperates at a suitable point with the drive line (ADL). Such a detector can cooperate, for instance, with a wheel or a drive shaft or the clutch or gearbox. All this is schematically indicated in Fig. 5.

By the use of a device according to the invention in or on motor vehicles, it can be indicated to traffic behind the motor vehicle when this vehicle is being braked with more than a negligible deceleration. It is of importance here that the group of additional brake lights is also actuated if the vehicle decelerates by a cause other than the operation of the brake lever. The control for the additional brake light(s) is in fact independent of the operation of the brake lever.

If desired, the attention value of the additional brake light can be further increased, for instance by having the additional brake light turn on and off a number of times, for instance three times, after it has been switched on by means of the deceleration detection means. If desired, it is also possible to set the initial burning time for a predetermined time, optionally followed by a number of times of blinking. To that end, the control device 14 can be coupled to, or provided with, a time control element, and optionally an automatic blinking unit. Such a time control element is known per se and can comprise, for instance, a hold circuit.

It is also possible, if desired, to have the additional group of brake lights burn more brightly according as the vehicle is subject to greater deceleration. To that end, the contact arm can, for instance, be part of or be coupled to a potentiometer. An additional application possibility of the additional group of brake lights is to have one or more brake lights of the additional group of brake lights blink as soon as the speed of the vehicle falls below a threshold value to be set, which could be, for instance, about 40 km/hour for traffic on the highway. Such a control can be programmed into the control device 14. In this way, following traffic can be warned that a queue is forming ahead, which is especially important when visibility is poor. To avoid an objectionable situation where all cars in a queue have additional brake lights blinking, optionally a manually operated or automatically operable switch can be used. This can be a time switch which switches off the blinking lights after a predetermined time or, for instance, a proximity switch which switches off the blinking lights as soon as a following vehicle is detected within a certain distance. These and similar modifications are obvious to those skilled in the art.

The additional brake lights and the control device lend themselves well to be produced and sold as an accessory set for motor vehicles.

## Claims

1. A brake light system for motor vehicles, comprising at least one group of one or more brake lights which is conventionally energizable through a switch connected with the braking system of the motor vehicle for indicating when the braking system is being operated, **characterized in that** the brake light system is further provided with at least one additional group of one or more brake lights arranged relatively high, and with a control device comprising deceleration detection means which, in operation, in response to an extent of deceleration of the motor vehicle in excess of a predetermined value and independently of the operation of the braking system, provide a signal which energizes the additional group of brake lights directly or indirectly.

2. A brake light system according to claim 1, **characterized in that** the deceleration detection means comprise a weight movable back and forth in a housing along a predetermined path, the housing in operation being mounted in the motor vehicle in such a manner that the predetermined path extends substantially in the longitudinal direction of the motor vehicle.

3. A brake light system according to claim 1, **characterized in that** the deceleration detection means comprise at least one piezoelectric element.

4. A brake light system according to claim 1, **characterized in that** the deceleration detection means comprise an acceleration detector designed as an integrated circuit.

5. A brake light system according to claim 1, **characterized in that** the deceleration detection means comprise a speed detector and a time measuring device.

6. A brake light system according to any one of claims 1 to 5, **characterized in that** the control device comprises a processor or minicomputer which operatively receives input signals from a speed detector and a time measuring device and provides a control signal for the additional group of brake lights.

7. A brake light system according to claim 6, **characterized in that** the time measuring device is integrated into the processor or minicomputer.

8. A brake light system according to any one of claims 5 to 7, **characterized in that** the speed detector comprises a sensor which cooperates with the conventional speedometer of the motor vehicle.

9. A brake light system according to any one of claims 5 to 7, **characterized in tha**t the speed detector is coupled to an anti-blocking system (ABS) or a traction control system of the motor vehicle.

10. A brake light system according to any one of claims 5 to 7, **characterized in that** the speed detector comprises a sensor cooperating with a part of the drive line of the motor vehicle.

11. A brake light system according to any one of the preceding claims, **characterized in that** the control device comprises a time control element which, in response to a signal of the deceleration detection means, determines the burning time of the brake lights of the additional group.

12. A brake light system according to any one of the preceding claims, **characterized in that** the control device comprises an automatic blinking unit.

13. A brake light system according to any one of the preceding claims, **characterized in that** the control device comprises means for regulating the intensity of the brake lights of the additional group depending on the extent of deceleration.

14. A brake light system according to any one of claims 1 to 13, **characterized in that** the control device is arranged to supply, starting from a signal from a speed detector, an intermittent energization signal to at least one brake light of the additional group in order to cause this at least one brake light to blink as soon as the speed of the vehicle falls below a predetermined value.

15. A brake light system according to claim 14, **characterized by** switching-off means for the intermittent energization signal.

16. A brake light system according to claim 15, **characterized in that** the switching-off means comprise a proximity switch which is operated as soon as a following vehicle is detected within a predetermined distance.

17. A checking device for deceleration detection means which comprise a sliding weight movable back and forth in a housing, according to claim 2, **characterized by** a pin arranged in a sleeve, capable of being pushed into an opening in the housing of the deceleration detection means against the rear side of the sliding weight, which pin is movable in the sleeve against a resetting force and is coupled with indicating means for indicating in what position of the pin, and hence at what force exerted on the sliding weight, the sliding weight has moved over such a distance along the predetermined path that the contact element is operated.

18. A motor vehicle provided with a brake light system according to any one of claims 1 to 16.

19. A motor vehicle according to claim 18, **characterized in that** at least the deceleration detection means are built into a lamp housing of one of the brake lights.

20. An accessory set for a motor vehicle, comprising at least one brake light and a control device which comprises deceleration detection means according to any one of claims 1 to 16, for mounting on or to a motor vehicle as a supplement to the standard brake lights already present.
